# EUROPÄISCHE PATENTSCHRIFT

(11) **EP 1 896 257 B1**
(45) Veröffentlichungstag und Bekanntmachung des Hinweises auf die Patenterteilung: **10.01.2018**
(21) Anmeldenummer: 06761663.1
(22) Anmeldetag: 09.06.2006
(51) Int. Cl.: B32B 27/40, B65D 35/08

(54) **LAMINAT FÜR TUBEN- UND BEHÄLTERKONSTRUKTIONEN**
LAMINATE FOR TUBE AND CONTAINER STRUCTURES
LAMINE POUR STRUCTURES DE TUBES ET DE RECIPIENTS

(30) Priorität: 15.06.2005 DE 102005029156
(43) Veröffentlichungstag der Anmeldung: 12.03.2008
(73) Patentinhaber: Essel Deutschland Gmbh & Co. Kg, 01099 Dresden (DE)
(72) Erfinder: ARZ, Jürgen, 81375 München (DE)
(74) Vertreter: Sperling, Thomas
(86) Internationale Anmeldenummer: PCT/DE2006/001034
(87) Internationale Veröffentlichungsnummer: WO 2006/133692

(56) Entgegenhaltungen:
- EP-A- 1 541 344
- EP-A1- 0 622 181
- EP-A2- 0 151 978
- DATABASE WPI Week 199429 Derwent Publications Ltd., London, GB; AN 1994-238397 XP002411402 & JP 06 171657 A (DAINIPPON PRINTING CO LTD) 21. Juni 1994 (1994-06-21)

## Beschreibung

Die vorliegende Erfindung betrifft die Herstellung und Verwendung eines Laminates für Tuben und Behälter. Das Endprodukt nach Verschweißung und Weiterverarbeitung im Herstellungsprozess für Tuben und Behälter soll eine Tuben- und Behälterverpackung in Beständigkeit, Festigkeit und Optik derart definieren, dass die Verpackung möglichst viele Bereiche der Industrie hinsichtlich ihrer Anforderungen an Design, Form und Funktion abdeckt.

Aus der EP 0622181 A1 ist beispielsweise bekannt, dass komplexe Laminate mit einem mehrschichtigen Aufbau, deren Komponenten des Mehrschichtverbundes nicht mehr extrusionsfähig sind, durch einen Beschichtungs- und Kaschierprozess dargestellt werden können. Aus der genannten EP ist auch bekannt, dass das Tubenlaminat auf verschiedene Art bedruckt werden kann, und zwar entweder auf der Außenseite der obersten Folienschicht oder im Umkehrdruck auf deren Innenseite. Die Folie kann zum Schutz des Druckbildes auf der Außenseite mit einem Schutzlack überlackiert werden. Erfindungsgemäß wird die zu bedruckende Außenseite mit Kunststofffolien, insbesondere Siegelfolien beschrieben, welche eine Dicke von 6 bis 160 µm aufweisen können, die dann gegen einen Hauptverbund von 96 - 300 µm kaschiert werden. Die Verbindung des Hauptverbundes mit der zu bedruckenden Siegelfolie wird durch eine Kaschierschicht herbeigeführt. In einem nachfolgenden Verfahren wird die Tubenschulter an die Röhre angeformt.

In der EP 0939037 A1 wird ein Verpackungsmaterial beschrieben, welches auf dessen nach außen weisender Seite ein hologrammähnliches Erscheinungsbild aufweist. Die darin beschriebene Außenseite kann entweder auf der Oberfläche oder im Umkehrdruck auf dessen Innenseite bedruckt werden. Die Verbindung der einzelnen Schichten bzw. der Holgrammfolie wird durch eine Kaschierschicht herbeigeführt. In einem nachfolgenden Verfahren wird dann die Tubenschulter an die Röhre angeformt.

Derartige Folienkonstruktionen beschreiben den wichtigen Bestandteil in Form der Kaschierkleberschicht, der die Bindung innerhalb der Verbunde herbeiführt, technisch nicht ausreichend und das Bedrucken im Bereich der Längsschweißnaht wird nicht ausgeführt.

Prinzipiell beschreiben die genannten Erfindungen die Gesamt-Laminatdicke bzw. den Schichtaufbau der einzelnen Schichten stets unabhängig vom Durchmesser bzw. der geometrischen Form der Tube bzw. des Behälters.
Die Kaschierklebeschicht wird ebenfalls unabhängig vom Durchmesser und der geometrischen Form der Tube bzw. des Behälters stets über Auftragsmengen definiert.

Bei üblicherweise gleichen Verbunddicken und gleicher Klebeschichtstärke nehmen die mechanischen Kräfte innerhalb der Klebeschicht zu, je kleiner der Tubendurchmesser wird. Ähnlich verhält es sich bei besonderen geometrischen Formen wie beispielsweise bei elliptischen Tubenquerschnitten. Entlang des ovalen Umfangs der Tube verteilen sich die Kräfte innerhalb der Klebeschicht in unterschiedlicher Höhe.

Die Kräfte innerhalb der Kaschierschicht müssen deshalb unabhängig von Durchmesser und Form der Behälter zumindest im Gleichgewicht, idealerweise aber immer größer sein als die Rückstellkräfte der Folien des außen liegenden Verbundes, da es sonst im Bereich der Krümmungsübergänge, z. B.. vom Schlauch in den Tubenkopf, zu einer Delaminierung innerhalb des Verbundes kommen kann.

Hinsichtlich der Dekoration geben die genannten Erfindungen keine technische Lehre zur Herstellung des bedruckten Bereichs innerhalb der Längsschweißnaht an.

Aufgabe der vorliegenden Erfindung soll es daher sein, eine alternative Folienkonstruktion vorzuschlagen, die unabhängig vom Durchmesser und der geometrischen Form der Tuben- und Behälterkonstruktion eine in Abhängigkeit der eingesetzten Folien geeignete Kaschierschicht aufzeigt und es andererseits ermöglicht, im Bereich der Längsschweißnaht der betreffenden Behälter derart uneingeschränkt zu dekorieren, dass die Behälter am gesamten Umfang bedruckt werden können und in ihrer graphischen Gestaltung keinen Beschränkungen mehr unterliegen.
Diese Aufgabe wird durch die Merkmale des Anspruchs 1 gelöst.

Erfindungsgemäß wird dies durch einen speziellen Folienverbund mit folgendem Schichtaufbau erreicht:
- eine funktionelle Trägerschicht a) in der Ausführung als Trägerfolie mit einer Dicke von 140 bis 600 µm, bevorzugt 160 bis 400 µm, die siegelbar ist und eine
- Schmelztemperatur im Bereich von 126 bis 160 °C besitzt,
- eine Kaschierschicht b) und
- eine Druckschicht c) in der Ausführung als siegelbare Druckfolie, die siegelbar mit der funktionelle Trägerschicht a) ist, und deren Schmelztemperatur im Bereich von 105 bis 136 °C liegt und eine Dicke von 20 bis 200 µm, bevorzugt 30 bis 100 µm aufweist.

An der Siegelnaht kommt es dann zum Verschweißen der Folien c+c, a+a und a+c.

Bevorzugt sind Tubenlaminate in einer Gesamtdicke von 200 bis 800 µm, am meisten bevorzugt sind dabei 250 bis 500 µm.
Es werden folgende Ausführungsformen vorgeschlagen:
Die siegelbare Druckfolie c) wird im Normal- oder Konterdruck oder beidseitig in einer beliebigen Kombination von Druck- oder Prägeverfahren Rolle zu Rolle dekoriert und in einem nachfolgenden Prozess auf eine Mono-, Coex, Mehrschicht- oder Laminatfolie, wie sie zur Tubenherstellung Verwendung findet, im Schichtaufbau für die beabsichtigte Anwendung aufkaschiert. Es besteht auch die Möglichkeit die funktionelle Trägerschicht a) mit allen Dekorationsverfahren zu dekorieren.
Die siegelbare Druckfolie c) wird Inline in der Druckmaschine unter der Zuführung der funktionellen Trägerschicht a) mittels Kaschiersystem zur Herstellung der Kaschierschicht b) aufkaschiert. Die Kaschierung kann auch Offline geschehen.

Im Dekorationsprozess ist es möglich, Mattgrade, Perlmutteffekte, Barriereeigenschaften, UV- oder Lichtschutz, Soft-Touch-Effekte, bedruckte Hochglanzeffekte, Heißfolienprägungen, Sterilisierung, antistatische Effekte, thermochromatische Effekte, chemische Indikationen und elektrische Leitfähigkeit zu erzielen.

Die Dekoration wird in der Regel im Normal- oder Konterdruck auf die siegelbare Druckfolie c) vollflächig mit all den gängigen Druckverfahren bis in die Schweißnaht sowie in den Schulterbereich reichend - so wie sie beispielsweise bei der Tubenherstellung Anwendung findet - derart aufgebracht, dass der Tubenkörper im verschweißten Zustand am Tubenumfang vollflächig und ohne Unterbrechung dekoriert werden kann. Die Dekoration der siegelbaren Druckschicht c) im Umkehrdruck oder die Dekoration der funktionellen Trägerfolie a) auf dessen Außenseite hat zudem den Vorteil, dass die Dekoration vollflächig geschützt gegen Füllgüter oder andere Einflüsse im Verbund liegt. Andererseits bewirkt die außen liegende Folie c) auch, dass bei 360°-Dekorationen bis in den Siegelbereich Wärmeeinwirkungen während der Herstellung der Längsschweißnaht keinen Einfluss auf die innen liegenden Druckfarben haben. Die Dekoration kann sowohl auf der Innenseite als auch auf der Außenseite der siegelbaren Druckfolie c) aufgebracht sein.

Versuche haben ergeben, dass das Bedrucken der Folien c) und a) mit Lösemittelfarben oder Lacken die besten Ergebnisse erzielt.
Der Farbauftrag dieser Farbsysteme bedingt das Bedrucken im Tiefdruck. Diese Farbsysteme sind daher besonders bevorzugt zu verwenden, da sie z. B. bei der Tubenherstellung den Temperatureinwirkungen während des Längsverschweißens und der Anformung des Tubenkopfes selbst bei einem Farbauftrag auf der Außenseite der Siegelfolie c) widerstehen.

Als geeignetes Farbsystem sind beispielsweise Lösemittelfarbsysteme 90 der Fa. Sicpa und Hartmann zu nennen, deren Viskositäten innerhalb von 13 bis 20 Sekunden liegen. Das Auftragsgewicht der Farbsysteme liegt in Abhängigkeit der Dekoration sowie der Druckformgeometrie im Mengenbereich von 2 bis 5 g/m².
Die Verwendung ausgewählter Farbserien wie beispielsweise von Silber Hartmann HGS Silber A 4307 oder die gröber auflösende MPI 90 S 20 sowie die Silberserie der Fa. Sicpa 62MC251 - 9012 ergeben eine prägeähnliche Anmutung.

Es sei auch erwähnt, dass der Farbauftrag im Offsetdruck, Flexodruck oder Siebdruck unter Verwendung von UV-Farbsystemen oder lösemittelfreien und wasserverdünnbaren Farbsystemen erfolgen kann.

Lackierungsversuche zeigen, dass beim Auftrag von Lacksystemen auf der siegelbaren Druckfolie c) mit Lösemittelfarben oder Lacken die besten Ergebnisse erzielt werden. Wie beim Bedrucken bedingt die Lackierung den Tiefdruck und wird daher besonders bevorzugt verwendet.

Die Kaschierschicht b) bildet die Hauptkomponente der Bindung zwischen der Druckschicht c) und der funktionellen Schicht a). Die Einflussgröße Kraft pro Fläche definiert die mechanische Beanspruchung in den Schichten, daher wird im Folgenden der Term Spannung σ mit der Einheit MPa benutzt.
Demnach muss die Spannung des Klebstoffes, also dessen Adhäsionskräfte und Kohäsionskräfte, sich mindestens immer im Gleichgewicht mit den auftretenden Spannungen der siegelbaren Druckschicht c) befinden, idealerweise aber größer als deren Spannungen sein und bei stets gleicher Gesamtlaminatdicke diesen Spannungen im stabilen Verbund entgegenwirken und zwar unabhängig vom Durchmesser oder der geometrischen Form der Tube bzw. des Behälters oder des Folienmaterials der Schicht c).
Darüber hinaus muss das Kaschiersystem auch dann noch genügend Haftung sicherstellen, wenn die Folie c) im Umkehrdruck auf der Innenseite bedruckt ist und die Kaschierschicht b) mit den Druckfarben in Kontakt kommt. Beobachtungen zeigen, dass besonders Silberfarbsysteme dazu tendieren, eine Spaltung in der Kaschierung herbeizuführen. Dieses Phänomen wurde bei den Versuchen berücksichtigt, um die graphische Gestaltung der Tuben nicht zu limitieren.
Um die Kaschierschicht b) mit Festigkeitswerten zu untermauern, wurde der Beanspruchungszustand mit Hilfe der Finite-Element-Methode (FEM) simuliert. Dazu wurde für die Algorithmen eine Reihe von ausgewählten Folienmaterial-Kennwerten, insbesondere mittlere E-Module für die Druckschicht c) und funktionelle Trägerschicht a), bestimmt.
Die Viskosität der Materialien wurde vernachlässigt, da der Umformvorgang mit hoher Geschwindigkeit stattfindet. Bei der Tubengeometrie wurde eine maximale Geometrie vorausgesetzt, also der kleinste kommerzielle Durchmesser (D=10 mm), der kleinste Schulterradius (R = 3 mm) und der größte Schulterwinkel (α = 60°), so dass sich die Ergebnisse auch auf alle Tuben mit größeren Durchmessern, Umformradien, Umformwinkeln oder beispielsweise auch auf elliptische Geometrien übertragen lassen können.
Die Berechnungen gehen von einem physikalisch linearen und geometrisch nichtlinearen Materialverhalten bei großen Verformungen aus. Da von rotationssymmetrischen Formen ausgegangen werden kann, erlaubte diese Methodik auch eine Berechnungsanalyse für einen dreidimensionalen Körper. Thermische Einflüsse auf die Kaschierschicht b) wurden vernachlässigt, da diese den Vorgang nicht negativ beeinflussen.

Bei der Simulation wurde der Folienverbund in 50 Schritten belastet, bis die Innenkontur der Tube erreicht wird, was dem Werkzeugschließen entspricht. In dieser Position wurde nur die funktionelle Trägerschicht a) festgehalten, was dem Anformen der Schulter entspricht und dann wieder entlastet, was schließlich dem Öffnen des Werkzeuges entspricht.
In der Simulation erfolgte die Lagerung ausschließlich an der funktionellen Trägerschicht a), was dem höchstmöglichen kritischen Beanspruchungszustand der Kaschierschicht b) nach der Entlastung entspricht und einen Extremwert darstellt, der in der Praxis nicht mehr überschritten werden kann.
Die Simulation ergab Spannungswerte, die senkrecht innerhalb der Kaschierschicht wirken, von σ > 2 MPa am äußersten Rand in der Kaschierschicht b) beziehungsweise maximal von σ = 5,6 MPa im Inneren der Kaschierschicht b).

Die Ergebnisse der FEM-Simulation wurden den Ergebnissen der Prüfung der Kaschierschicht b) nach DIN 53357 gegenübergestellt. Bei allen Prüfmustern wurde stets von einer innenseitig bedruckten Druckschicht c) ausgegangen, die mit unterschiedlichen Farbsystemen dekoriert und kaschiert wurde.
In allen Versuchen ließ sich die Kaschierschicht b) nicht mehr trennen bzw. führte zum Abreißen der Druckschicht c).

Aus den Ergebnissen kann daher von einer größeren Klebstofffestigkeit in der Kaschierschicht b) im Vergleich zur Festigkeit der Druckfolie c) geschlossen werden, deren Festigkeit von σ > 40 MPa in den Zugversuchen ermittelt wurde.

Daraus ergibt sich folgende Schlussfolgerung: Im Rahmen der Berechnungen mittels FEM wurden besonders kritische Beanspruchungszustände dargestellt. Es wird deutlich, dass die innerhalb der Kaschierschicht b) zu erwartenden Spannungen von σ = 2 MPa, die ein Ablösen der Druckschicht c) hervorrufen können, wesentlich kleiner sind als die ertragbaren Spannungen σ > 40 MPa, die die Druckschicht aufweist. Bei geeigneter Auswahl von Klebstoffen in der Kaschierschicht b) kann damit ein Ablösen bzw. eine Separation der Folien ausgeschlossen werden.

Die hier beschriebenen Lösungsansätze zeigen geeignete Klebstoffe sowie deren Komponenten und Prozessparameter auf. Dabei war es wichtig, möglichst hohe Festigkeitswerte zu erzielen, und zwar stets unabhängig von der graphischen Gestaltung und unabhängig von den Bedingungen wie der Krümmung des Laminats innerhalb der geometrischen Form der Tuben-bzw. Behälterkonstruktion:

Beispielhaft wurden Klebstofffestigkeiten, die derart hohe Festigkeitswerte aufweisen, in den folgenden Versuchsreihen mit ein- oder zweikomponentigen thermischen Reaktionsklebstoffen erzielt, wobei die Einstellung von folgenden Parametern abhängig war:
- der Auftragsmenge des Klebstoffes, der Zylindertemperatur und der Trockentemperatur einerseits,
- der Klebstoffbasis, dem Komponentensystem, dem prozentualen Festkörperanteil in Abhängigkeit von optimaler Viskosität sowie dem Mischungsverhältnis des Klebstoffes mit dem Härtersystem andererseits.

Beispielhaft für die Anwendung und Verarbeitung sind die charakteristischen Kennwerte in Abstimmung mit den Kaschiersystemen in der folgenden Tabelle dargestellt:

| Hersteller | Bezeichnung | Komponente | KlebstoffBasis | System | Festkörperanteil | Mischungsverhältnis | Auftragsmenge | Zylindertemperatur | Trockentemperatur |
|---|---|---|---|---|---|---|---|---|---|
| Rohm& Haas | Adcote 301A | Klebstoff | PU | ROH | 70% | 3 zu 2 | 3,5 - 4,5 g/m² | 60° | >60° |
| Rohm& Haas | Adcote 350A | Härter | PU | NCO | 81% | | | | |
| Rohm& Haas | Adcote 775A | Klebstoff | PU | NCO | 75% | 4 zu 1 | 3,5 - 4,0 g/m² | <60° | >60° |
| Rohm& Haas | Adcote 775A | Härter | PU | ROH | 75% | | | | |
| Rohm& Haas | UNO-FLEXE | einkomponentig | PU | NCOterminiert | 75% | - | 2,0 - 5,0 g/m² | <60° | 60 |
| Henkel | Liofol UR 3649 | Klebstoff | PU | NCO | 60% | 3 zu 1 | 2,0 - 5,0 g/m² | 90° | 60° |
| Henkel | Liofol UR 6255 | Härter | PU | ROH | 50% | | | | |

| | | | | | | | | | |
|---|---|---|---|---|---|---|---|---|---|
| Komponentensysteme: ROH = Hydroxyl NCO = Isocyanat | | | | | | | | | |

Des Weiteren können auch Kaschiersysteme als Lackkaschierungen oder Trockenkaschierungen mit lösemittelhaltigen oder lösemittelfreien Klebstoffen, wässerigen Dispersionsklebstoffen, 2-komponentigen Reaktionsklebstoffen oder Heißsiegeilacken verwendet werden. Als Basispolymere für die Kaschiersysteme kommen gebräuchliche Stoffe wie Alpha-Olefine, PET, PU, Epoxy-Polymere, Acrylat, PVC , PVOH etc. in Frage.

Zu nennen sind auch UV-reaktive Kaschierklebstoffe. Bei diesen UV-Kaschierungen kommen die Klebstoffe mit einem Feststoffgehalt von 100% zum Einsatz. Das ergibt hinsichtlich der Blasenbildung und Trübung im kaschierten Verbund einen Vorteil. Versuche zeigen, dass radikalische und kationische Systeme zwar eine sehr gute Haftung herbeiführen, andererseits zeigt sich einschränkend, dass besonders im Innenseitendruck der Druckfolie c), insbesondere bei vollflächigem Kontakt mit den Druckfarben, keine ausreichende Kaschierhaftung zu erzielen ist. In Anbetracht dieser Tatsache kann die UV-Kaschierung nur abhängig von der graphischen Gestaltung der Tuben oder Behälter eingesetzt werden.

Besonders charakteristisch für die Folie c) ist, dass sie in Bezug auf Druck und Siegeleigenschaften optimiert ist. Grundsätzlich ist diese Folie dadurch definiert, dass sie bei guten Siegeleigenschaften (thermische Eigenschaften) auch besondere mechanische Eigenschaften aufweist. Entscheidend ist, dass die Folie sich im Druckprozess möglichst dimensionsstabil verhält, um passgenaues Drucken zu ermöglichen.

Diese Stabilität wird wesentlich definiert durch die Dehnung unter Temperatur. Als besonders geeignet haben sich Folien herausgestellt bei einer Dehnung <2% bei 23°. Meßmethode nach ASTM DIN 527.

Da die Kaschierschicht bereits dahingehend ausgelegt und optimiert ist, eine Folienstärke der siegelbaren Druckfolie c) zwischen 20 bis 200 µm, besonders im Bereich großer Krümmungen, beispielsweise für Tuben beim Schulterübergang oder bei besonderen geometrischen Formen kräftemäßig zu neutralisieren, wird daher im Folgenden auf die Schichtdicke der siegelbaren Druckfolie c) nicht mehr eingegangen.

Zur Anwendung als Druckfolie c) sind die folgenden Polyolefinmonofolien geeignet:
- Polyethylen:
   - HDPE (Polyethylen hoher Dichte) mit einer Dichte größer 0,94-0,977 g/cm³, TM 128 -136°;
   - MDPE (Polyethylen mittlerer Dichte) mit einer Dichte von 0,926-0,944 g/cm³ , TM 120 -136°;
   - LMDPE (lineares Polyethylen mittlerer Dichte) mit einer Dichte von 0,926-0,940 g/cm³ , TM 128 -136°;
   - LDPE (Polyethylen niedriger Dichte) mit einer Dichte von 0,916-0,925 cm³, TM 105 -115°.

Dabei sind Polyethylen der Sorten HDPE und MDPE aufgrund ihrer mechanischen Eigenschaften besonders bevorzugt einzusetzen. Es können auch Gemische aus den genannten Polyolefinen verwendet werden, so dass mechanische oder thermische Eigenschaften eingestellt werden können.
- durch Metallocene katalysierte PE-Typen, die zur Erzielung hoch transparenter Eigenschaften verwendet werden können.
- Copolymere aus PP und Ethylen, wobei es sich hier um Random Copolymere, Blockpolymere, Statische Copolymere oder Propfcopolymere handeln kann.
- lonomerharze, wie beispielsweise Surlyn von DuPont, können Eigenschaften wie Transparenz, Verschweißbarkeit der eingesetzten Materialien verbessern.

Die Folien können mono- oder biaxial vorliegen, wobei die Verstreckung sequentiell oder simultan durchgeführt werden kann. Die so orientierten Molekülketten weisen eine hohe Transparenz auf. Die Folien können auch als Castfolien (Extrudierte Folien) ausgebildet sein.

Eine gute Sperrwirkung kann durch SiOₓ-Beschichtungen herbeigeführt werden. Diese Art von Beschichtungsverfahren sind Stand der Technik und daher bekannt. Eine Alternative erlaubt die Modifikation der Folien mit Nanopartikeln, um besondere Barriereeigenschaften und UV-Schutz herbeizuführen.

Die Funktionelle Trägerschicht a) dient zur Erzielung der benötigten Eigenschaften der Tuben- bzw. Behälterkonstruktion in Bezug auf Stabilität, Produktschutz, taktiles Empfinden und Verarbeitbarkeit. Hier gibt es eine große Anzahl an kommerziell verfügbaren Laminaten bzw. Mehrschichtlaminaten. Die Schichten sind einlagig oder mehrlagig aufgebaut, wobei einzelne Schichten unterschiedliche Aufgaben erfüllen. Beispielhaft für diese Aufgaben sind besondere Barrierefunktionen, die durch eine Metallschicht oder EVOH herbeigeführt werden.

Diese Folien sind an sich dem Stand der Technik bekannt und bestehen beispielsweise aus:
- Polyethylen:
   - HDPE (Polyethylen Hoher Dichte = High density) mit einer Dichte größer 0,94-0,977 g/cm³ , TM 128 -136°;
   - MDPE (Polyethylen mittlerer Dichte) mit einer Dichte von 0,926-0,944 g/cm³, TM 120 -136°;
   - LMDPE (lineares PE mittlerer Dichte) mit einer Dichte von 0,926-0,940 g/cm³, TM 128 -136°;
   - LDPE (Polyethylen niedriger Dichte) mit einer Dichte von 0,916-0,925 cm³, TM 105 -115°;

   Polyethylen der Sorten HDPE und MDPE sind aufgrund ihrer mechanischen Eigenschaften besonders bevorzugt einzusetzen. Es können auch Gemische aus den genannten Polyolefinen verwendet werden, so dass mechanische oder thermische Eigenschaften eingestellt werden können.
- durch Metallocene katalysierte Polyethylen-Typen, die zur Erzielung hoch transparenter Eigenschaften verwendet werden können.
- Polypropylen:
   - amorphes, kristallines oder hochkristallines Polypropylen;
   - ataktisches, isotaktisches oder syndiotaktisches Polypropylen.

   Sowohl Cast- als auch BOPP-Folien können zur Anwendung kommen. In Abhängigkeit der eingesetzten Katalysatortechnik und der Molekulargewichtsverteilung lassen sich Filme besonders in Bezug auf ihre mechanischen, optischen und thermischen Eigenschaften herstellen.
- Copolymere aus Propylen und Ethylen, wobei es sich hier um:
   - Random-Copolymere,
   - Block-Copolymere,
   - statische Copolymere oder
   - Propfcopolymere
   handeln kann. Der Einsatz dieser Materialien erlaubt in Abhängigkeit der Schmelzviskositäten und Temperaturen das Erzielen von hohen Siegelnahtfestigkeiten mit auf PE basierenden Materialien.
- lonomerharze wie beispielsweise Surlyn von DuPont können alleine oder als Mischung beschriebener Polymere eingesetzt werden. Man kann dadurch die Transparenz oder Siegelnahtfestigkeit verbessern.
- Cycloolefine:
   - Copolymere COC oder
   - durch Metallocene katalysierte COC => MCOC.

Der so durch die Kaschierschicht b) hergestellte Verbund beruht auf einer Kombination einer funktionellen Trägerschicht a) und einer siegelbaren Druckschicht c). In Abstimmung mit den Prozessanforderungen im Druckprozess und dem Herstellungsprozess der Tuben- und Behälterkonstruktionen wird dadurch eine Verpackung hergestellt, die hinsichtlich Beständigkeit, Festigkeit und Optik den Anforderungen der Industrie an Design, Form und Funktion gerecht wird.

Der derart hergestellte Folienverbund unterliegt nun keinen Beschränkungen mehr hinsichtlich graphischer Gestaltung, Durchmesser oder geometrischer Form der Tube bzw. des Behälters.
In einem nachfolgenden Verfahren wird der Folienverbund an der Siegelstelle überlappend oder aber bevorzugt Stoß an Stoß mit den bekannten Siegeltechniken hergestellt. Bei der Versiegelung Stoß an Stoß werden Siegelkanten in gegenläufigen Winkeln angeschnitten und übereinander verschweißt.
Diese Art der Herstellung ist Stand der Technik und wird beispielsweise von der Fa. PSG unter der Technologie "INVISEAM" angeboten.

Nachstehend sind beispielhaft Ausführungsformen beschrieben ,bei denen derartige Folienkonstruktionen zum Einsatz kommen können:

### Beispiel Tube:

Als Funktionelle Trägerschicht a) wird eingesetzt: Polyethylen niederer Dichte ( LDPE) in einer Schichtdicke von 300 µm.
Die Kaschierschicht b.) besteht aus Klebstoff Adcote 775A und dem Härter 775 C mit einem Auftragsgewicht von 3 g/m².

Für die Siegelbare Druckschicht c) wird verwendet: Polyethylen hoher Dichte (HDPE) in einer Schichtdicke von 100 µm, auf der Innenseite bedruckt, am Umfang vollflächig bedruckt und Inline mit der Funktionellen Trägerschicht a) zusammenkaschiert.
In einem im Tubenprozess nachfolgenden Verfahren wird dann die Tubenschulter mittels Compression-Moulding-Verfahren oder Injection-Moulding an die Tubenröhre angeformt. Form und Durchmesser der Tubenschulter unterliegen keinen Limitierungen mehr.

### Beispiel Behälter Sachets (Warenproben):

Als Funktionelle Trägerschicht a) wird eingesetzt: Lineares Polyethylen mittlerer Dichte (LMDPE) in einer Schichtdicke von 120 µm
Die Kaschierschicht b.) besteht aus Klebstoff Liofol UR 3649 und Härter Liofol UR 6255 mit einem Auftragsgewicht von 2 g/m².
Für die Siegelbare Druckschicht c) wird verwendet: Polyethylen niederer Dichte (LDPE) in einer Schichtdicke von 20 µm, auf der Außenseite bedruckt und Inline mit der Funktionellen Trägerschicht a) zusammenkaschiert.

## Patentansprüche

1. Laminat für Tuben- und Behälterkonstruktionen, bestehend aus einer innen liegenden Trägerschicht a), einer außen liegenden dünneren Druckschicht c), die auf der Außenseite und/oder Innenseite ein Druckbild aufweist, und einer dazwischen angeordneten Kaschierschicht, **dadurch gekennzeichnet, dass** die funktionelle Trägerschicht a) eine siegelbare Trägerfolie mit einer Dicke von 140 bis 400 µm ist, und eine Schmelztemperatur in einem Bereich von 126 bis 160 °C aufweist, die Druckschicht c) eine mit der funktionellen Trägerschicht a) siegelbare Druckfolie ist und eine Schmelztemperatur im Bereich von 105 bis 136 °C und eine Dicke von 20 bis 100 µm aufweist, und dass die Kaschierschicht b) aus einem ein-komponentigen, NCO-terminierten Reaktionsklebstoff auf Polyurethanbasis oder aus einem zweikomponentigen Reaktionsklebstoff auf Polyurethanbasis mit einem Komponentensystem ROH = Hydroxyl, NCO = Isocyanat besteht und der prozentuale Festkörperanteil und das Mischungsverhältnis zwischen dem Klebstoff und Härter sowie die Auftragsmenge des Klebstoffs, die Zylindertemperatur und die Trockentemperatur wie folgt festgelegt sind:
| KlebstoffBasis | Komponente | Komponentensystem | Festkörperanteil | Mischungsverhältnis | Auftragsmenge | Zylindertemperatur | Trockentemperatur |
|---|---|---|---|---|---|---|---|
| PU | Klebstoff | ROH | 70 % | 3 zu 2 | 3,5 - 4,5 g/m² | 60° | >60° |
| | Härter | NCO | 81 % | | | | |
oder
| KlebstoffBasis | Komponente | Komponentensystem | Festkörperanteil | Mischungsverhältnis | Auftragsmenge | Zylindertemperatur | Trockentemperatur |
|---|---|---|---|---|---|---|---|
| PU | Klebstoff | NCO | 75 % | 4 zu 1 | 3,5 - 4,0 g/m² | <60° | >60° |
| | Härter | ROH | 75 % | | | | |
oder
| KlebstoffBasis | Komponente | Komponentensystem | Festkörperanteil | Mischungsverhältnis | Auftragsmenge | Zylindertemperatur | Trockentemperatur |
|---|---|---|---|---|---|---|---|
| PU | eine Komponente | NCOterminiert | 75 % | | 2,0 - 5,0 g/m² | <60° | 60° |
oder
| KlebstoffBasis | Komponente | Komponenten -system | Festkörperanteil | Mischungsverhältnis | Auftragsmenge | Zylindertemperatur | Trockentemperatur |
|---|---|---|---|---|---|---|---|
| PU | Klebstoff | NCO | 60% | 3 zu 1 | 2,0 - 5 g/m² | 90° | 60° |
| | Härter | ROH | 50% | | | | |

2. Laminat nach Anspruch 1, **dadurch gekennzeichnet, dass** die Druckfolie c) aus einem der folgenden Polyolefine ausgewählt ist:
▪ Polyethylen in den Ausführungen:
∘ HDPE (Polyethylen hoher Dichte) mit einer Dichte größer 0,94 - 0,977 g/cm³, TM 128 - 136°;
∘ MDPE (Polyethylen mittlerer Dichte) mit einer Dichte von 0,926 - 0,944 g/cm³, TM 120 - 136°;
∘ LMDPE (lineares Polyethylen mittlerer Dichte) mit einer Dichte von 0,926 - 0,940 g/cm³, TM 128 - 136°;
∘ LDPE (Polyethylen niedriger Dichte) mit einer Dichte von 0,916 - 0,925 cm³, TM 105 - 115°;
∘ durch Metallocene katalysierte PE-Typen;
∘ Copolymere aus PP und Ethylen, wobei es sich hier um Random-Copolymere, Blockpolymere, Statische Copolymere oder Propfcopolymere handelt;
∘ lonomerharze, die Eigenschaften wie Transparenz, Verschweißbarkeit der eingesetzten Materialien verbessern können.

## Claims

1. Laminate for tubes and container structures composed of an inner backing layer a) and outer thinner print layer c), that includes a print image on the outer side and/or on the inner side and a laminating layer arranged between them, **characterised in that** the functional backing layer a) has a base sheet that may be sealed with a density of 140 to 400 µm and a melting point in a range between 126 and 160 °C, the print layer c) is a printing film that may be sealed with the functional backing layer a) that has a melting point in a range between 105 and 136 °C and a density of 20 to 100 µm and that the laminating layer b) is composed of a single-component, NCO-terminated polyurethane-based reaction adhesive or a two-component polyurethane-based reaction adhesive with an ROH = Hydroxyl, NCO = Isocyanate component system and the percentage solids content and the mixing ratio between the adhesive and hardener as well as the application quantity of the adhesive, the cylinder temperature and the drying temperature are specified as follows:
| Adhesive base | Components | Component system | Solids content | Mixing ratio | Application quantity | Cylinder temperature | Drying temperature |
|---|---|---|---|---|---|---|---|
| PU | Adhesive | ROH | 70% | 3 to 2 | 3.5 - 4.5 g/m² | 60° | >60° |
| | Hardener | NCO | 81% | | | | |
or
| Adhesive base | Components | Component system | Solids content | Mixing ratio | Application quantity | Cylinder temperature | Drying temperature |
|---|---|---|---|---|---|---|---|
| PU | Adhesive | NCO | 75% | 4 to 1 | 3.5 - 4.0 g/m² | <60° | >60° |
| | Hardener | ROH | 75% | | | | |
or
| Adhesive base | Components | Component system | Solids content | Mixing ratio | Application quantity | Cylinder temperature | Drying temperature |
|---|---|---|---|---|---|---|---|
| PU | Single component | NCO-terminated | 75% | | 2.0 - 5.0 g/m² | <60° | 60° |
or
| Adhesive base | Components | Component system | Solids content | Mixing ratio | Application quantity | Cylinder temperature | Drying temperature |
|---|---|---|---|---|---|---|---|
| PU | Adhesive | NCO | 60% | 3 to 1 | 2.0 - 5 g/m² | 90° | 60° |
| | Hardener | ROH | 50% | | | | |

2. Laminate according to claim 1, **characterised in that** the printing film c) is selected from one of the following polyolefins:
▪ Polyethylene in the following forms:
∘ HDPE (high-density polyethylene) with a density greater than 0.94 - 0.977 g/cm3, TM 128 -136°;
∘ MDPE (medium-density polyethylene) with a density of 0.926 - 0.944 g/cm3, TM 120-136°;
∘ LMDPE (linear medium-density polyethylene) with a density of 0.926 - 0.940 g/cm3, TM 128-136°;
∘ LDPE (low-density polyethylene) with a density of 0.916 - 0.925 g/cm3, TM 105-115°;
∘ Metallocene-catalysed PE types;
∘ Copolymers of PP and ethylene, whereby they comprise random copolymers, block copolymers, static copolymers or graft copolymers;
∘ lonomer resins that may improve characteristics such as transparency or weldability of the materials employed.

## Revendications

1. Pelliculage pour fabrication de tubes et de récipients, se composant d'une couche support a) disposée à l'intérieur, d'une couche d'impression c) disposée à l'extérieur et affichant une image imprimée sur la face externe et/ou interne, et entre les deux, d'une couche intermédiaire de pelliculage, **caractérisé en ce que** la couche support a) fonctionnelle est un film support scellable, ayant une épaisseur de 140 à 400 µm et une température de fusion comprise entre 126 et 160°C, la couche d'impression c) est un film d'impression scellable avec la couche support fonctionnelle a), ayant une température de fusion comprise entre 105 et 136°C et une épaisseur de 20 à 100 µm, et **en ce que** la couche de pelliculage b) se compose d'un adhésif de réaction mono-composant à terminaisons NCO, à base de polyuréthane ou d'un adhésif de réaction à deux composants à base de polyuréthane, avec un système de composants ROH = Hydroxyle, NCO = Isocyanate, et **en ce que** le pourcentage de corps solide, le rapport du mélange entre la colle et l'agent durcisseur, ainsi que la quantité d'enduction, la température du cylindre et la température sèche sont définis comme suit :
| Base de l'adhésif | Composant | Système de composants | Pourcentage de corps solide | Rapport du mélange | Quantité d'enduction | Température du cylindre | Température sèche |
|---|---|---|---|---|---|---|---|
| PU | Colle | ROH | 70 % | 3 pour 2 | 3,5 - 4,5 g/m² | 60° | > 60° |
| | Agent durcisseur | NCO | 81 % | | | | |
ou
| Base de l'adhésif | Composant | Système de composants | Pourcentage de corps solide | Rapport du mélange | Quantité d'enduction | Température du cylindre | Température sèche |
|---|---|---|---|---|---|---|---|
| PU | Colle | NCO | 75 % | 4 pour 1 | 3,5 - 4,0 g/m² | < 60° | > 60° |
| | Agent durcisseur | ROH | 75 % | | | | |
ou
| Base de l'adhésif | Composant | Système de composants | Pourcentage de corps solide | Rapport du mélange | Quantité d'enduction | Température du cylindre | Température sèche |
|---|---|---|---|---|---|---|---|
| PU | Mono-composant | Terminaisons NCO | 75 % | | 2,0 - 5,0 g/m² | < 60° | 60° |
ou
| Base de l'adhésif | Composant | Système de composants | Pourcentage de corps solide | Rapport du mélange | Quantité d'enduction | Température du cylindre | Température sèche |
|---|---|---|---|---|---|---|---|
| PU | Colle | NCO | 60 % | 3 pour 1 | 2,0 - 5 g/m² | 90° | 60° |
| | Agent durcisseur | ROH | 50 % | | | | |

2. Pelliculage selon la revendication 1, **caractérisé en ce que** le film d'impression c) est sélectionné parmi l'un des polyoléfines suivants :
▪ Polyéthylène de types :
∘ HDPE (polyéthylène haute densité) à masse volumique supérieure à 0,94 - 0,977 g/cm3, TM 128 -136° ;
∘ MDPE (polyéthylène moyenne densité) à masse volumique comprise entre 0,926 - 0,944 g/cm3, TM 120 -136° ;
∘ LMDPE (polyéthylène à moyenne densité linéaire) à masse volumique comprise entre 0,926 - 0,940 g/cm3, TM 128 - 136° ;
∘ LDPE (polyéthylène basse densité) à masse volumique comprise entre 0,916 - 0,925 cm3, TM 105-115° ;
∘ Types de PE à catalyse par métallocène ;
∘ Copolymère à base de PP et d'éthylène, en l'occurrence random copolymère, polymère bloc, copolymère statique ou copolymère greffé ;
∘ Résine ionomère, pouvant améliorer des propriétés telles que la transparence et la cohésion des matériaux utilisés.
